# EUROPÄISCHE PATENTSCHRIFT

(11) **EP 1 469 586 B1**
(45) Veröffentlichungstag und Bekanntmachung des Hinweises auf die Patenterteilung: **08.08.2007**
(21) Anmeldenummer: 04002194.1
(22) Anmeldetag: 02.02.2004
(51) Int. Cl.: H02P 6/20, F02N 11/08, H02P 6/24

(54) **Vorrichtung zur Verbesserung des Start-Stopp-Betriebes eines Fahrzeuges**
Apparatus for improving a vehicle start-stop operation
Appareil pour améliorer le fonctionnement d'arrêt et de redémarrage d'un véhicule

(30) Priorität: 14.04.2003 DE 10317090
(43) Veröffentlichungstag der Anmeldung: 20.10.2004
(73) Patentinhaber: ROBERT BOSCH GMBH, 70442 Stuttgart (DE)
(72) Erfinder: Beulich, Klaus, 74343 Sachsenheim (DE); Ackermann, Manfred, 71570 Oppenweiler (DE)

(56) Entgegenhaltungen:
- EP-A- 1 375 908
- DE-A- 10 119 852
- DE-A- 19 900 282

## Beschreibung

Die Erfindung betrifft eine Vorrichtung zur Verbesserung des Start-Stopp-Betriebes eines Fahrzeugs.

### Stand der Technik

Zum Zwecke einer Verringerung des Kraftstoffverbrauchs, einer Verbesserung der elektrischen Bordnetzleistung und einer Verbesserung des Start-Stopp-Betriebes eines Fahrzeugs wurden in den letzten Jahren Systeme entwickelt, die einen integrierten Startergenerator auf der Kurbelwelle aufweisen, sowie Systeme, die anstelle eines üblichen Startergenerators einen riemenbetriebenen Startergenerator aufweisen. Bei diesen bekannten Systemen liegt beim Startbetrieb im Start-Stopp-Betriebsfall insbesondere dann, wenn die vorhandene Bordnetzspannung 12 V beträgt, im Vergleich zu einem konventionellen Startsystem ein verhältnismäßig kleines Trägheitsmoment an der Kurbelwelle vor. Ferner ergibt sich bei einer stromminimierten Auslegung des riemenbetriebenen Startergenerators oder des integrierten Startergenerators im Vergleich zu einem konventionellen Startsystem ausgehend von der Drehzahl Null ein vergleichsweise kleines maximales Startmoment.

Diese Effekte führen zu einer starken Abhängigkeit der Starteigenschaften von der Auspendelposition des Verbrennungsmotors, die sich in unterschiedlichen Amplituden und Energien der zu überwindenden Momente bis zur ersten vollen Kompression ausdrückt. Insbesondere beim Vorliegen einer ursprünglich nur für einen Generatorbetrieb entwickelten Klauenpolmaschine wird die elektrische Erregung über Schleifringe zugeführt mit einer stromminimierten Auslegung unter Anwendung einer relativ großen Zeitkonstante, die beispielsweise bei etwa 100 ms liegt. Im Falle einer heißen Erregerwicklung, beispielsweise im Bereich von 180°C, ist sowohl die Zeitkonstante als auch der deutlich verringerte stationäre Wert des durch die Erregerwicklung fließenden Erregerstromes ein Problem für die Startdynamik im Start-Stopp-Betrieb.

Bezüglich des Start-Stopp-Betriebes gibt es Forderungen der Fahrzeughersteller, gemäß welcher bei einem sogenannten Ampelstart die Zeit, bis das Fahrzeug in Vortrieb geht, im Bereich von 300 bis 500 ms liegen soll. Ein Erfüllen dieser Forderungen mit den bekannten Systemen ist insbesondere bei einer knappen Momentenauslegung und hohen Generator-Temperaturen problematisch.

Aus der EP 0 825 700 A1 ist ein Spannungsversorgungssystem mit erhöhter Ausgangsleistung bekannt. Bei diesem bekannten System wird bei einer Zuschaltung eines starken Verbrauchers die an der Erregerwicklung liegende Spannung kurzzeitig gegenüber der Bordnetzspannung erhöht. Diese Spannungserhöhung wird entweder mittels zusätzlicher Wicklungen und Hilfsdioden im Generator oder mit Hilfe eines Spannungswandlers erhalten.

Aus der DE 197 21 386 A1 ist eine Startvorrichtung zum Starten einer Brennkraftmaschine bekannt. Diese bekannte Startvorrichtung weist einen Startermotor auf, der über ein Starterrelais mit einer Spannungsquelle verbindbar und mit der Brennkraftmaschine zum Andrehen in Eingriff bringbar ist. Die Ansteuerung des Starterrelais und/oder des Startermotors erfolgt über ein elektronisches Steuergerät. Dieses steuert dem Starterrelais und/oder dem Startermotor zugeordnete Halbleiter-Leistungsendstufen derart an, dass zumindest in einem Start-Stopp-Betrieb das Starterrelais im Stopp-Zustand der Brennkraftmaschine seine Einspurstellung aufweist, d. h. den Ritzel des Startermotors in den Zahnkranz der Brennkraftmaschine einspurt. Dadurch wird neben einer Zeiteinsparung beim Starten in der Start-Stopp-Betriebsart ein sauberes, verschleißfreies Einspuren erreicht.

Aus der DE 101 19 852 A1 ist ein Verfahren und eine Vorrichtung zur verzögerten Generatorvorerregung bei Start eines Verbrennungsmotors bekannt, bei dem der Erregerstrom des Generators nur verzögert frei geschaltet wird. Diese verzögerte Freischaltung ist beispielsweise zeit- oder drehzahlabhängig. Sie bewirkt, dass das bremsende Moment des Generators gegenüber herkömmlichen Verfahren und Vorrichtungen verringert wird, wodurch im Startfall ein Abbremsen des Verbrennungsmotors verhindert wird.

Aus der DE 199 00 282 A1 ist eine Einrichtung zur Leistungssteigerung von elektronisch kommutierten Drehfeldmaschinen mit Hilfe von in Ring geschalteten Wicklungen und höheren Strangzahlen bekannt, bei der durch geeignete Ansteuerung der zugeordneten Umrichter-Brücken eine optimale Regelung sowohl im Motor- als auch im Generatorbetrieb erfolgt. Damit ist es möglich, die Drehfeldmaschinen als Starter-Generatoren in einem Fahrzeug einzusetzen.

### Vorteile der Erfindung

Eine Vorrichtung mit den Merkmalen des Anspruchs 1 weist gegenüber dem Stand der Technik den Vorteil auf, dass die geforderte Startdynamik ohne eine Vergrößerung der elektrischen Maschine und/oder der Phasenströme im Generator erreicht wird. Und ferner wird gemäß Anspruch 1 eine Erregervorrichtung realisiert, die kurzzeitig eine höhere stationäre Erregerleistung und einen zeitlich schnelleren Erregerstrom-Aufbau zulässt. Das Abregeln bzw. Umschalten auf die kleinere stationäre Erregerleistung erfolgt in Abhängigkeit von der Generatordrehzahl.

Gemäß einer ersten Ausführungsform ist die Erregerwicklung über einen Schalter entweder mit der Bordnetzspannung oder mit einer Spannungsquelle verbunden, die eine im Vergleich zur Bordnetzspannung größere Hilfsspannung zur Verfügung stellt. Bei dieser Ausführungsform ist die Erregerwicklung ähnlich dimensioniert wie bei bekannten Nur-Generator-Applikationen. Sie hat eine vergleichsweise große Windungszahl. Es fließt ein vergleichsweise kleiner Erregerstrom. Der Vorteil dieser Ausführungsform ist ein bei Generatorbetrieb und in der zweiten Phase des Startvorgangs, also in den für die Bürstenauslegung relevanten Zeiten, kleiner Generatorstrom. Die in der ersten Phase des Startvorgangs benötigte höhere Spannung wird entweder durch eine zeitlich begrenzte Spannungserhöhung der regulären Bordnetzspannung mittels eines Hochsetzstellers oder unter Verwendung eines kurzzeitig zuschaltbaren elektrischen Speichers mit höherer Spannung zur Verfügung gestellt.

Gemäß einer zweiten Ausführungsform wird der durch die Erregerwicklung fließende Erregerstrom durch einen Spannungsregler zur Verfügung gestellt. Die Erregerwicklung ist bei dieser Ausführungsform im Vergleich zu bekannten Nur-Generator-Applikationen deutlich niederohmiger ausgeführt. Sie hat eine kleinere Windungszahl. Es fließt ein höherer stationärer Erregerstrom. Die Erregung wird unter Verwendung des Spannungsreglers mit der regulären Bordnetzspannung schnell hochgefahren und startdrehzahlabhängig abgeregelt. Der Vorteil dieser Ausführungsform besteht darin, dass keine Spannungserhöhung über die reguläre Bordnetzspannung hinaus notwendig ist. Die bei Einschalten des Erregerstroms erforderliche hohe Dynamik und die für hohe Startmomente bei heißer Erregerwicklung notwendige stationär erhöhte Erregerleistung werden bei dieser Ausführungsform durch die niederohmige Auslegung der Erregerwicklung ermöglicht. Die Anpassung an die benötigte Generator-Erregung erfolgt durch einen entsprechend angepassten Generator-Regler. Für die Start-Steuerung kann die Endstufe des angepassten Generator-Reglers mit einer Ansteuerung in Abhängigkeit von der GeneratorDrehzahl und/oder der Startzeit eingesetzt werden.

Ein Vorteil beider vorgenannter Ausführungsformen ist die Realisierung hoher Startmomente durch Schaffung einer kurzzeitig erhöhten Erregerleistung, wobei gleichzeitig die Dynamik des Momenten-Aufbaus erhöht wird.

Weitere vorteilhafte Eigenschaften der Erfindung ergeben sich aus deren beispielhafter Erläuterung anhand der Zeichnung.

### Zeichnung

Die Figur 1 zeigt ein Schaltbild eines ersten Ausführungsbeispiels für eine Vorrichtung gemäß der Erfindung. Die Figur 2 zeigt ein Schaltbild eines zweiten Ausführungsbeispiels für eine Vorrichtung gemäß der Erfindung.

Die Figur 3 zeigt ein erstes Diagramm zur Veranschaulichung der Funktionsweise der Erfindung. Die Figur 4 zeigt ein zweites Diagramm zur Veranschaulichung der Funktionsweise der Erfindung.

### Beschreibung

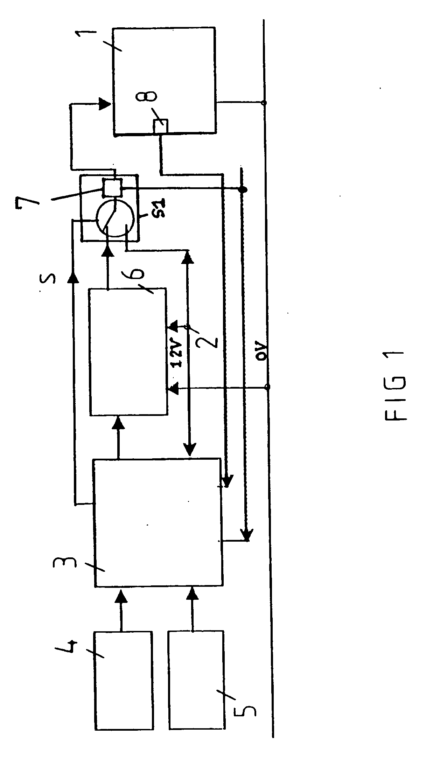

Die Figur 1 zeigt ein Schaltbild eines ersten Ausführungsbeispiels für eine Vorrichtung gemäß der Erfindung. Die dargestellte Vorrichtung, mittels welcher ein im Vergleich zum Stand der Technik verbesserter Start-Stopp-Betrieb eines Fahrzeugs erreicht wird, weist eine dem Startergenerator des Fahrzeugs zugeordnete Erregerwicklung 1 auf. Der durch die Erregerwicklung 1 fließende Erregerstrom wird der Erregerwicklung über einen Schalter S1 zugeführt und ist - je nach Schalterstellung - entweder von einem Bordnetzspannungsanschluss 2 oder von einer Spannungsquelle 6 abgeleitet. Die Bordnetzspannung beträgt 12 V. Die Spannungsquelle 6 ist entweder ein Hochsetzsteller, in welchem die Bordnetzspannung von 12V in eine höhere Spannung umgesetzt wird, oder ein elektrischer Speicher, welcher auf eine höhere Spannung aufgeladen ist. Die höhere Spannung beträgt beispielsweise 100V.

Die Steuerung bzw. Umschaltung des Schalters S1 erfolgt durch ein Steuersignal s, welches von einem Start-Steuergerät 3 zur Verfügung gestellt wird. Das Start-Steuergerät 3 steuert weiterhin auch den Hochsetzsteller 6 an.

Das Start-Steuergerät 3 generiert die genannten Steuersignale in Abhängigkeit von den Ausgangssignalen eines Drehzahlgebers 4, der ein der Drehzahl des Fahrzeuggenerators entsprechendes Drehzahlsignal bereitstellt, und/oder eines Startzeit-Gebers 5, der ein StartzeitSignal bereitstellt. Das Startzeitsignal wird beispielsweise vom Motorsteuergerät getriggert und enthält Informationen über den Startbeginn und die Startdauer.

Im Normalbetrieb des Fahrzeugs und auch in der Stopp-Phase des Start-Stopp-Betriebes befindet sich der Schalter S1 in seiner unteren Schaltstellung, so dass die Energieversorgung der Erregerwicklung aus dem Bordnetz erfolgt.

Erfolgt im Start-Stopp-Betrieb in der Stopp-Phase zum Zwecke der Einleitung eines Startvorganges eine Betätigung des Gaspedals des Fahrzeugs, dann erzeugt das Start-Steuergerät 3 ein Steuersignal s, welches eine Umschaltung des Schalters S1 in seine obere Schaltstellung bewirkt. Dies hat zur Folge, dass die vom Hochsetzsteller 6 bzw. dem elektrischen Speicher 6 bereitgestellte höhere Spannung mit der Erregerwicklung 1 verbunden wird. Dies entspricht der Einleitung eines Übererregungsbetriebes, der beispielsweise für eine Zeitdauer zwischen etwa 60ms und etwa 200ms aufrechterhalten wird.

Die Erregerwicklung 1 ist bei diesem Ausführungsbeispiel ähnlich dimensioniert wie bei bekannten Nur-Generator-Applikationen. Sie weist eine vergleichsweise hohe Windungszahl auf, beispielsweise 370 Windungen. Es fließt im Normalbetrieb des Fahrzeugs nur ein vergleichsweise kleiner Erregerstrom.

Durch die Umschaltung des Schalters S1 von seiner unteren in seine obere Schaltstellung wird eine kurzzeitige Spannungserhöhung über die reguläre Bordnetzspannung von 12V hinaus durchgeführt. Die Höhe, die Dauer und die Charakteristik der erhöhten Erregerleistung ist dabei abhängig von der gemessenen Generatordrehzahl, d. h. vom Ausgangssignal des Drehzahlgebers 4, und/oder von den vom Startzeitgeber 5 gelieferten Startzeitsignalen.

In der ersten Phase eines Startvorganges, in welcher ein hoher Startmoment-Bedarf vorliegt, wird durch die Bereitstellung einer höheren stationären Erregerleistung ein zeitlich schnellerer Aufbau des Erregerstroms erreicht.

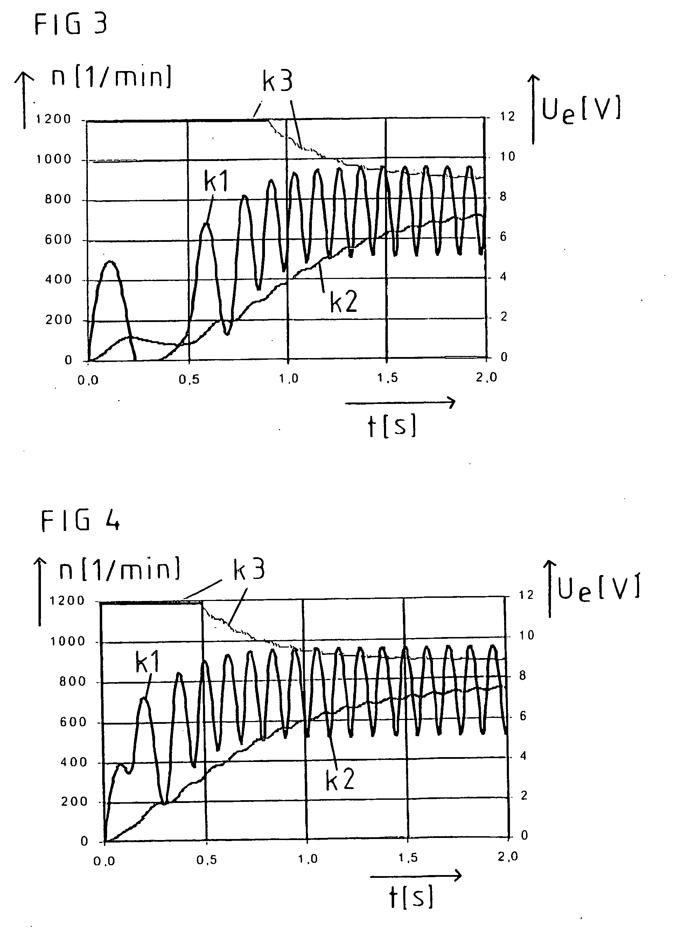

Der Zeitpunkt der Rückumschaltung auf die kleinere stationäre Erregerleistung erfolgt in Abhängigkeit von der Generatordrehzahl, wie noch unten im Zusammenhang mit den Figuren 3 und 4 veranschaulicht wird. Weiterhin wird im Zusammenhang mit dem Zeitpunkt der Rückumschaltung auf die kleinere stationäre Erregerleistung berücksichtigt, dass aus thermischen und Strombelastungsgründen der erhöhte Erregerstrom nur möglichst kurzzeitig fließen darf.

Der Vorteil dieser vergleichsweise hochohmigen Auslegung der Erregerwicklung besteht darin, dass bei Generatorbetrieb und in der zweiten Phase des Startvorganges, also in den für die Bürstenauslegung relevanten Zeiten, nur ein vergleichsweise kleiner Erregerstrom fließt.

In vorteilhafter Weise berücksichtigt das Start-Steuergerät 3 bei der Generierung der Steuersignale s weiterhin auch die Ausgangssignale eines Wicklungstemperaturgebers 8 und/oder eines Erregerstromgebers 7, der beispielsweise wie in Figur 1 dargestellt realisiert sein kann. Durch diese Berücksichtigung des gemessenen oder geschätzten Erregerstromes und/oder der gemessenen oder geschätzten Wicklungstemperatur kann bis zu einem bestimmten Grad der Temperatureinfluss und der Spannungseinfluss auf den Erregerstrom ausgeregelt werden.

Der Schalter S1 ist als elektronischer Schalter realisiert. Mittels dieses Schalters wird nach dem Erreichen einer vorgegebenen Generatordrehzahl, insbesondere unter zusätzlicher Berücksichtigung von zeitlichen Kriterien, vom Übererregungsbetrieb auf eine Versorgung aus der regulären Bordnetzspannung rückumgeschaltet.

Anstelle eines Hochsetzstellers kann, wie bereits oben ausgeführt wurde, ein auf eine im Vergleich zur Bordnetzspannung höhere Spannung ausgelegter elektrischer Speicher eingesetzt werden. In diesem Fall ist eine minimale Abregelung der Spannungshöhe über die jeweils vorliegende Entladezeitkonstante vorgegeben. Eine Beschleunigung der Abregelung kann bei Bedarf unter Verwendung von geschalteten Entlade-Widerständen erfolgen.

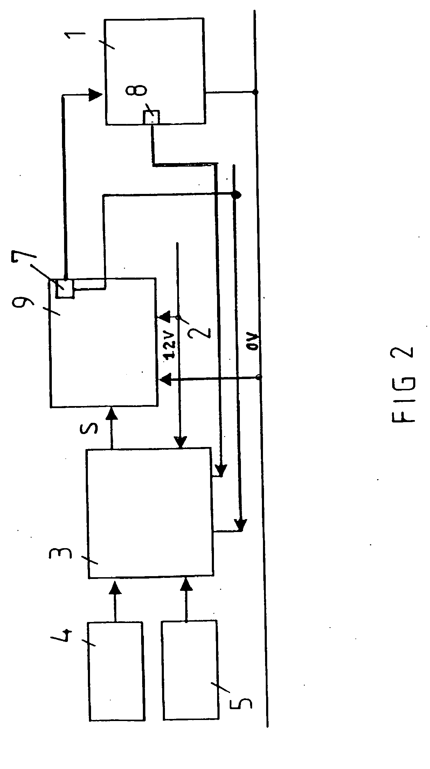

Die Figur 2 zeigt ein Schaltbild eines zweiten Ausführungsbeispiels für eine Vorrichtung gemäß der Erfindung. Die dargestellte Vorrichtung, mittels welcher ein im Vergleich zum Stand der Technik verbesserter Start-Stopp-Betrieb eines Fahrzeugs erreicht wird, weist eine dem Startergenerator des Fahrzeugs zugeordnete Erregerwicklung 1 auf. Der durch diese Erregerwicklung 1 fließende Erregerstrom wird der Erregerwicklung von einem PWM-Spannungsregler 9 zur Verfügung gestellt. Dem PWM-Spannungsregler 9 wird ein von einem Start-Steuergerät 3 generiertes Steuersignal s zugeführt. Weiterhin ist der PWM-Spannungsregler 9 mit einem 12V-Bordnetzspannungsanschluss 2 und mit Fahrzeugmasse 0V verbunden. Der 12V-Bordnetzspannungsanschluss 2 ist weiterhin mit dem Start-Steuergerät 3 verbunden.

Das Start-Steuergerät 3 generiert die genannten Steuersignale s in Abhängigkeit von den Ausgangssignalen eines Drehzahlgebers 4, der ein der Drehzahl des Fahrzeugsgenerators entsprechendes Drehzahlsignal bereitstellt, und/oder eines Startzeitgebers 5, der ein Startzeitsignal bereitstellt. Das Startzeitsignal wird beispielsweise vom Motorsteuergerät getriggert und enthält Informationen über den Startbeginn und die Startdauer.

In vorteilhafter Weise berücksichtigt das Start-Steuergerät 3 bei der Generierung der Steuersignale s auch die Ausgangssignale eines Wicklungstemperaturgebers 8 und/oder eines Erregerstromgebers 7. Durch diese Berücksichtigung des gemessenen oder geschätzten Erregerstromes und/oder der gemessenen oder geschätzten Wicklungstemperatur kann bis zu einem bestimmten Grad der Temperatureinfluss und der Spannungseinfluss auf den Erregerstrom ausgeregelt werden.

Im Normalbetrieb des Fahrzeugs und auch in der Stopp-Phase des Start-Stopp-Betriebes erfolgt die Energieversorgung der Erregerwicklung 1 in bekannter Weise aus dem Bordnetz.

Erfolgt im Start-Stopp-Betrieb in der Stopp-Phase zum Zwecke der Einleitung eines Startvorganges eine Betätigung des Gaspedals des Fahrzeugs, dann erzeugt das Start-Steuergerät 3 ein Steuersignal s, aufgrund dessen der PWM-Spannungsregler die Erregung mit der regulären Bordnetzspannung von 12V schnell hochfährt und dann die Spannung startdrehzahlabhängig abregelt.

Die Erregerwicklung 1 ist bei diesem Ausführungsbeispiel deutlich niederohmiger dimensioniert als bei bekannten Nur-Generator-Applikationen. Sie weist eine vergleichsweise kleine Windungszahl auf, beispielsweise 210 Windungen. Es fließt im Normalbetrieb ein vergleichsweise großer Erregerstrom.

Der Vorteil dieses Ausführungsbeispiels besteht darin, dass keine über die reguläre Bordnetzspannung hinausgehende Spannungserhöhung erforderlich ist. Die am Anfang der Startphase erforderliche hohe Dynamik und die für hohe Startmomente bei heißer Erregerwicklung stationär erhöhte Erregerleistung werden bei diesem Ausführungsbeispiel durch die niederohmige Auslegung der eine kleine Windungszahl aufweisenden Erregerwicklung erreicht. Eine Anpassung an die benötigte Generator-Erregung erfolgt durch ein entsprechend angepasstes Tastverhältnis des Generatorreglers. Für die Startsteuerung kann die Endstufe des angepassten Generatorreglers mit einer Ansteuerung in Abhängigkeit von der Generatordrehzahl und/oder der Startzeit eingesetzt werden.

Bei der in der Figur 2 gezeigten Vorrichtung sind folglich die in der Vorrichtung gemäß Figur 1 vorgesehene Spannungsquelle 6 und der Schalter S1 durch einen PWM-Spannungsregler 9 ersetzt. Da bei der in der Figur 2 gezeigten Vorrichtung nur unterhalb einer Spannung von 12V ausgesteuert werden muss, muss aufgrund der niederohmigen Auslegung der Erregerwicklung 1 die maximale Leistungsfähigkeit bei 100% Tastverhältnis entsprechend hochgesetzt werden. Eine Vorrichtung gemäß Figur 2 ist kostengünstig realisierbar.

Das vom Drehzahlgeber 4 gelieferte Generator-Drehzahlsignal kann bei beiden vorstehend beschriebenen Vorrichtungen ein durch eine einfache Auswertung erhaltener Drehzahl-Mittelwert sein. Die Startzeit kann im Sinne einer thermischen Überwachungsgröße verwendet werden. Ein Schätzwert für die Temperatur der Erregerwicklung kann im Sinne einer Kompensation des Temperatureinflusses zur Einstellung einer gewünschten Erregerleistung verwendet werden.

Beide vorstehend beschriebenen Ausführungsbeispiele haben den Vorteil einer Realisierung hoher Startmomente durch Bereitstellung einer kurzzeitig erhöhten Erregerleistung, wobei gleichzeitig die Dynamik des Momenten-Aufbaus erhöht ist.

Nachfolgend wird anhand der Figuren 3 und 4 die Berücksichtigung der Generatordrehzahl bei der Generierung der Steuersignale s durch das Start-Steuergerät 3 veranschaulicht.

Die Figur 3 zeigt beispielhaft das Durchdrehverhalten eines 4-Zylinder-Ottomotors bei Verwendung eines Riemen-Startergenerators ausgehend von einer ungünstigen Auspendelposition des Motors. Die Kurve k1 zeigt den Verlauf der Generatordrehzahl n über der Zeit t, die Kurve k2 den Verlauf des Drehzahl-Mittelwertes über der Zeit t und die Kurve k3 den Verlauf des Mittelwertes der Erregerspannung Ue über der Zeit t. Charakteristisch für das gezeigte Diagramm ist, dass die erste volle Kompression mit einer Drehzahl im Bereich von 0 überwunden wird. Die zeit- und drehzahlabhängige Ausbildung des Drehzahlmittelwertes ist über eine Glättungszeitkonstante von 0,5s in einfacher Weise realisiert. Die Erregerspannung Ue wird in folgender Weise eingestellt:
- Für Drehzahlmittelwerte, die kleiner als 300 Umdrehungen pro Minute sind, entspricht die Erregerspannung der maximalen Erregerspannung von 12V.
- Für Drehzahlmittelwerte, die größer als 300 Umdrehungen pro Minute sind, erfolgt eine Abregelung der Erregerspannung von der maximalen Erregerspannung auf eine Erregerspannung von 9V im Sinne einer drehzahlabhängigen e-Funktion.

Aus der Figur 3 ist weiterhin ersichtlich, dass die Erhöhung der Drehzahl langsam erfolgt und infolge dessen die Abregelung der Erregerspannung erst nach etwa 0,8 Sekunden beginnt.

Die Figur 4 zeigt beispielhaft das Durchdrehverhalten desselben 4-Zylinder-Ottomotors bei Verwendung eines Riemen-Startergenerators ausgehend von einer günstigen Auspendelposition des Motors. Die Kurve k1 zeigt den Verlauf der Generatordrehzahl n über der Zeit t, die Kurve k2 den Verlauf des Drehzahl-Mittelwertes über der Zeit t und die Kurve k3 den Verlauf der Erregerspannung Ue über der Zeit t. Charakteristisch für das gezeigte Diagramm ist, dass die erste volle Kompression mit einer Drehzahl überwunden wird, die wesentlich größer ist als die entsprechende Drehzahl bei Figur 3. Der gesamte Durchdrehverlauf wird im Verhältnis zur Figur 3 dynamischer und erlaubt eine zu einem früheren Zeitpunk beginnende Abregelung der Erregerspannung. Beim gezeigten Ausführungsbeispiel beginnt die Abregelung der Erregerspannung bereits nach etwa 0,5 Sekunden. Aus der Figur 4 ist weiterhin ersichtlich, dass die Erhöhung der Drehzahl schneller erfolgt als bei Figur 3.

Aus einem Vergleich der Figuren 3 und 4 ergibt sich, dass eine Anpassung der Startmomente an den Startverlauf vorgenommen wird.

## Patentansprüche

1. Vorrichtung zur Verbesserung des Start-Stopp-Betriebs eines Fahrzeugs, welche eine dem Startergenerator des Fahrzeugs zugeordnete und an das Bordnetz des Fahrzeugs angeschlossenen Erregerwicklung sowie ein Start-Steuergerät aufweist, durch dessen Steuersignale der durch die Erregerwicklung fließende Erregerstrom beeinflusst wird, **dadurch gekennzeichnet, dass** das Start-Steuergerät (3) die den durch die Erregerwicklung (1) fließenden Erregerstrom beeinflussenden Steuersignale (s) in Abhängigkeit von den Ausgangssignalen eines die Generatordrehzahl erfassenden Drehzahlgebers (4) und/oder eines Startzeitgebers (5) generiert und dass Mittel (6, S1, 2; 9, 1) vorhanden sind, die kurzzeitig eine höhere stationäre Erregerleistung und einen zeitlich schnelleren Erregerstromaufbau zulassen.

2. Vorrichtung nach Anspruch 1, **dadurch gekennzeichnet, dass** die Mittel eine Spannungsquelle (6), die eine Hilfsspannung bereitstellt, die größer ist als die Bordnetzspannung umfassen und einen Schalter (S 1) aufweisen, der einen mit dem Ausgang der Spannungsquelle (6) verbundenen ersten Eingang und einen mit einem Bordnetzspannungsanschluss (2) verbundenen zweiten Eingang hat und dass dem Steuereingang des Schalters (S1) die vom Start-Steuergerät (3) generierten Steuersignale (s) zugeleitet werden.

3. Vorrichtung nach Anspruch 2, **dadurch gekennzeichnet, dass** die Spannungsquelle (6) ein Hochsetzsteller ist.

4. Vorrichtung nach Anspruch 2, **dadurch gekennzeichnet, dass** die Spannungsquelle (6) ein elektrischer Speicher ist.

5. Vorrichtung nach Anspruch 2, **dadurch gekennzeichnet, dass** die Mittel (6, S1, 2; 9, 1) einen Spannungsregler (9) aufweisen, dessen Ausgang mit der Erregerwicklung (1) verbunden ist, und dass die vom Start-Steuergerät (3) generierten Steuersignale (s) dem Spannungsregler (9) zugeführt werden.

6. Vorrichtung nach Anspruch 5, **dadurch gekennzeichnet, dass** der Spannungsregler (9) mit einem Bordnetzspannungsanschluss (2) verbunden ist.

7. Vorrichtung nach einem der vorhergehenden Ansprüche, **dadurch gekennzeichnet, dass** der Drehzahlgeber (4) einen Drehzahlmittelwert zur Verfügung stellt.

8. Vorrichtung nach einem der vorhergehenden Ansprüche, **dadurch gekennzeichnet, dass** sie einen Wicklungstemperaturgeber (8) aufweist, der zur Messung oder Schätzung der Temperatur der Erregerwicklung (1) vorgesehen ist und einen mit dem Start-Steuergerät (3) verbundenen Ausgang aufweist.

9. Vorrichtung nach einem der vorhergehenden Ansprüche, **dadurch gekennzeichnet, dass** sie einen Erregerstromgeber (7) aufweist, der zur Messung oder Schätzung des durch die Erregerwicklung (1) fließenden Erregerstroms vorgesehen ist und einen mit dem Start-Steuergerät (3) verbundenen Ausgang aufweist.

10. Vorrichtung nach Anspruch 8 oder 9, **dadurch gekennzeichnet, dass** das Start-Steuergerät (3) die Steuersignale (s) in Abhängigkeit von den Ausgangssignalen des Wicklungstemperaturgebers (8) und/ oder des Erregerstromgebers (7) generiert.

## Claims

1. Device for improving a vehicle start-stop operation which has an exciter winding which is assigned to the starter generator of the vehicle and connected to the on-board power system of the vehicle, and a start control unit by whose control signals the exciter current which flows through the exciter winding is influenced, **characterized in that** the start control unit (3) generates the control signals (s) which influence the exciter current flowing through the exciter winding (1) as a function of the output signals of a rotational speed signal generator (4) which senses the rotational speed of the generator and/or as a function of the output signals of a starting time signal generator (5), and **in that** means (6, S1, 2; 9, 1) are present which briefly permit a relatively high steady-state exciter power and a faster build-up of exciter current over time.

2. Device according to Claim 1, **characterized in that** the means comprise a voltage source (6) which makes available an auxiliary voltage which is higher than the on-board power system voltage, and said means have a switch (S1) which has a first input which is connected to the output of the voltage source (6), and a second input which is connected to an on-board power system voltage terminal (2), and **in that** the control signals (s) which are generated by the start control unit (3) are fed to the control input of the switch (S1).

3. Device according to Claim 2, **characterized in that** the voltage source (6) is a step-up controller.

4. Device according to Claim 2, **characterized in that** the voltage source (6) is an electrical memory.

5. Device according to Claim 2, **characterized in that** the means (6, S1, 2; 9, 1) have a voltage regulator (9) whose output is connected to the exciter winding (1), and **in that** the control signals (s) generated by the start control unit (3) are fed to the voltage regulator (9).

6. Device according to Claim 5, **characterized in that** the voltage regulator (9) is connected to an on-board power system voltage terminal (2).

7. Device according to one of the preceding claims, **characterized in that** the rotational speed signal generator (4) makes available a mean value of the rotational speed.

8. Device according to one of the preceding claims, **characterized in that** it has a winding temperature signal generator (8) which is provided for measuring or estimating the temperature of the exciter winding (1), and has an output which is connected to the start control unit (3).

9. Device according to one of the preceding claims, **characterized in that** it has an exciter current signal generator (7) which is provided for measuring or estimating the exciter current flowing through the exciter winding (1), and has an output which is connected to the start control unit (3).

10. Device according to Claim 8 or 9, **characterized in that** the start control unit (3) generates the control signals (s) as a function of the output signals of the winding temperature signal generator (8) and/or of the exciter current signal generator (7).

## Revendications

1. Dispositif pour améliorer le fonctionnement d'arrêt et de redémarrage d'un véhicule, qui comprend un enroulement d'excitation associé au générateur de démarrage du véhicule et raccordé au réseau de bord du véhicule, ainsi qu'un appareil de commande de démarrage, dont les signaux de commande influencent le courant d'excitation circulant à travers l'enroulement d'excitation,
**caractérisé en ce que**
l'appareil de commande de démarrage (3) génère les signaux de commande (s) influençant le courant d'excitation circulant à travers l'enroulement d'excitation (1) en fonction des signaux de sortie d'un capteur de vitesse de rotation (4) détectant la vitesse de rotation du générateur et/ou d'un capteur de temps de démarrage (5), et des moyens (6, S1, 2 ; 9, 1) permettent brièvement une puissance d'excitation stationnaire plus élevée et une montée du courant d'excitation plus rapide dans le temps.

2. Dispositif selon la revendication 1,
**caractérisé en ce que**
les moyens comprennent une source de tension (6), qui fournit une tension auxiliaire plus élevée que la tension du réseau de bord, et un commutateur (S1) qui comporte une première entrée reliée à la sortie de la source de tension (6) et une deuxième entrée reliée à une borne de tension du réseau de bord, et les signaux de commande (s) générés par l'appareil de commande de démarrage (3) sont transmis à l'entrée de commande du commutateur (S1).

3. Dispositif selon la revendication 2,
**caractérisé en ce que**
la source de tension (6) est un releveur de tension.

4. Dispositif selon la revendication 2,
**caractérisé en ce que**
la source de tension (6) est un accumulateur électrique.

5. Dispositif selon la revendication 2,
**caractérisé en ce que**
les moyens (6, S1, 2 ; 9, 1) comprennent un régulateur de tension (9), dont la sortie est reliée à l'enroulement d'excitation (1), et les signaux de commande (s) générés par l'appareil de commande de démarrage (3) sont transmis au régulateur de tension (9).

6. Dispositif selon la revendication 5,
**caractérisé en ce que**
le régulateur de tension (9) est relié à une borne de tension du réseau de bord (2).

7. Dispositif selon l'une quelconque des revendications précédentes,
**caractérisé en ce que**
le capteur de vitesse de rotation (4) fournit une valeur moyenne de la vitesse de rotation.

8. Dispositif selon l'une quelconque des revendications précédentes,
**caractérisé par**
il comprend un capteur de température d'enroulement (8), prévu pour la mesure ou l'estimation de la température de l'enroulement d'excitation (1) et dont une sortie est reliée à l'appareil de commande de démarrage (3).

9. Dispositif selon l'une quelconque des revendications précédentes,
**caractérisé par**
un capteur de courant d'excitation (7), prévu pour la mesure ou l'estimation du courant d'excitation circulant dans l'enroulement d'excitation (1) et dont une sortie est reliée à l'appareil de commande de démarrage (3).

10. Dispositif selon la revendication 8 ou 9,
**caractérisé en ce que**
l'appareil de commande de démarrage (3) génère les signaux de commande (s) en fonction des signaux de sortie du capteur de température d'enroulement (8) et/ou du capteur de courant d'excitation (7).
